(19) **Europäisches Patentamt**

**European Patent Office**

**Office européen des brevets**

(11) **EP 1 068 250 B1**

(12) **EUROPÄISCHE PATENTSCHRIFT**

(45) Veröffentlichungstag und Bekanntmachung des Hinweises auf die Patenterteilung:
**19.03.2003   Patentblatt 2003/12**

(51) Int Cl.$^7$: **C08G 18/08**, C08G 18/10

(21) Anmeldenummer: **98964470.3**

(86) Internationale Anmeldenummer:
**PCT/EP98/07753**

(22) Anmeldetag: **01.12.1998**

(87) Internationale Veröffentlichungsnummer:
**WO 99/031158 (24.06.1999 Gazette 1999/25)**

(54) **VERFAHREN ZUR HERSTELLUNG VON THERMOPLASTISCHEN POLYURETHANELASTOMEREN**

METHOD FOR PRODUCING THERMOPLASTIC POLYURETHANE ELASTOMERS

PROCEDE POUR LA PRODUCTION D'ELASTOMERES POLYURETHANES THERMOPLASTIQUES

(84) Benannte Vertragsstaaten:
**BE DE ES FR GB IT NL**

(30) Priorität: **13.12.1997  DE 19755545**

(43) Veröffentlichungstag der Anmeldung:
**17.01.2001   Patentblatt 2001/03**

(73) Patentinhaber: **BAYER AG**
**51368 Leverkusen (DE)**

(72) Erfinder:
• **KAUFHOLD, Wolfgang**
  **D-51061 Köln (DE)**
• **MÜLLER, Friedemann**
  **D-41470 Neuss (DE)**
• **BRÄUER, Wolfgang**
  **D-51375 Leverkusen (DE)**
• **LIESENFELDER, Ulrich**
  **D-51469 Bergisch Gladbach (DE)**
• **HEIDINGSFELD, Herbert**
  **D-50226 Frechen (DE)**

(56) Entgegenhaltungen:
**EP-A- 0 708 124        EP-A- 0 747 408**
**EP-A- 0 747 409        DE-A- 2 823 762**

## Beschreibung

Die vorliegende Erfindung betrifft ein Verfahren zur Herstellung von thermoplastischen Polyurethanelastomeren, die daraus resultierenden Produkte und ihre Verwendung.

Thermoplastische Polyurethane (TPU) finden eine breite Anwendung, weil sie gute Elastomereigenschaften aufweisen und leicht thermoplastisch weiterverarbeitet werden können. Durch geeignete Auswahl der Komponenten läßt sich eine große Variationsbreite mechanischer Eigenschaften erzielen. Eine Übersicht über TPU, ihre Eigenschaften und Anwendungen werden z.B. in Kunststoffe 68(1978)819. Kautschuk, Gummi, Kunststoffe 35(1982)569; G. Bekker, D. Braun: Kunststoff-Handbuch. Bd. 7 "Polyurethane" München, Wien, Carl Hanser Verlag 1983 gegeben. Einen Überblick über die Herstellverfahren gibt Plastikverarbeiter 40 (1989).

TPU werden aus zumeist linearen Polyolen, wie Polyester- oder Polyetherpolyolen, organischen Diisocyanaten und kurzkettigen zumeist difunktionellen Alkoholen (Kettenverlängerern) aufgebaut, Sie können diskontinuierlich oder kontinuierlich hergestellt werden.

Das kontinuierliche Extruderverfahren ist seit langem bekannt. Bei diesem Verfahren werden die Ausgangsstoffe in einen Schneckenreaktor dosiert, dort polyaddiert und anschließend in eine gleichmäßige Granulatform überführt (US-A 3 642 964, DE-C 23 02 564, DE-C 25 49 371, DE-A 32 30 009, EP-A 31 142).

Das Extruderverfahren ist vergleichsweise einfach, hat jedoch den Nachteil, daß die Ausgangsstoffe erst in dem Reaktor und unter Bedingungen gemischt werden, bei denen die Polyaddition breits eintritt, wodurch Inhomogenitäten und damit unerwünschte, nicht kontrollierbare Nebenreaktionen auftreten.

In EP-A 554 718 und EP-A 554 719 wird vorgeschlagen, das Extruderverfahren dadurch zu verbessern, daß die Ausgangsstoffe in einer Düse zusammengeführt und vor dem Eintritt in den Extruder gemischt werden. Da die Polyadditionsreaktion aber erst in dem Extruder stattfindet, weist auch das aus diesem Verfahren resultierende Produkt Inhomogenitäten auf, die besonders in Extrusionsprodukten wie Folien zum Tragen kommen.

Aus dem Stand der Technik sind ferner Herstellungsverfahren bekannt, bei denen die Ausgangsstoffe zunächst in einer Mischzone bei Temperaturen, bei denen keine Polyaddition eintritt, gemischt werden und anschließend in einer Reaktionszone, die die gewünschte Reaktionstemperatur aufweist, miteinander reagieren. Die Mischund die Reaktionszone werden vorzugsweise als Statikmischer ausgebildet (DE-A 28 23 762, EP-A 747 409, EP-A 747 408).

Es wurde nun gefunden, daß TPU mit verbesserter Homogentität und verbessertem Aufschmelzverhalten erhalten werden, wenn die Differenz der Temperaturen der zu ihrer Herstellung eingesetzten Ausgangsstoffe vor der Vermischung möglichst klein ist.

Gegenstand der Erfindung ist daher ein Verfahren zur kontinuierlichen Herstellung thermoplastischer Polyurethanelastomere, bei dem

ein oder mehrere organische Isocyanate (A) und

eine zerewitinoffaktive Wasserstoffatome aufweisende Mischung (B) aus

B1) 1 bis 85 Äquivalent-%, bezogen auf die Isocyanatgruppen in (A), einer oder mehrerer Verbindungen mit im Mittel mindestens 1.8 zerewitinoffaktiven Wasserstoffatomen und einem mittleren Molekulargewicht $\overline{M}_n$ von 450 bis 10000,

B2) 15 bis 99 Äquivalent-% (bezogen auf die Isocyanatgruppen in (A)) einer oder mehrerer Kettenverlängerungsmittel mit im Mittel mindestens 1,8 zerewitinoffaktiven Wasserstoffatomen und einem Molekulargewicht von 60 bis 400, sowie

0-20 Gew.-%. bezogen auf die Gesamtmenge an TPU, weiterer Hilfs- und Zusatzstoffe (C)

in einem Reaktor innerhalb von maximal 5 Sekunden homogen vermischt werden, wobei die Temperaturen der Komponenten (A) und (B) vor dem Eintritt in den Reaktor eine Differenz < 20°C aufweisen.

Als organische Isocyanate (A) können aliphatische, cycloaliphatische, araliphatische, aromatische und heterocyclische Polyisocyanate oder beliebige Gemische dieser Polyisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im einzelnen seien beispielhaft genannt: aliphatische Diisocyanate wie Ethylendiisocyanat, 1,4-Tetramethylendiisocyant, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'-Diphenylmethandiisocyanat. Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, daß ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Zerewitinoff-aktive Verbindungen (B1), die bei dem erfindungsgemäßen Verfahren eingesetzt werden, sind solche mit im Mittel mindestens 1,8 bis 3,0 zerewitinoff-aktiven Wasserstoffatomen und einem mittleren Molekulargewicht $\bar{M}_n$ von 450 bis 10000.

Eingeschlossen sind neben Aminogruppen. Thiolgruppen oder Carboxylgruppen aufweisenden Verbindungen insbesondere zwei bis drei, bevorzugt zwei Hydroxylgruppen aufweisende Verbindungen, speziell solche mit mittleren Molekulargewichten $\bar{M}_n$ von 450 bis 6000, besonders bevorzugt solche mit einem mittleren Molekulargewicht $\bar{M}_n$ von 600 bis 4500, z.B. Hydroxylgruppen aufweisende Polyester. Polyether, Polycarbonate und Polyesteramide.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid. Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifünktionellen Polyether eingesetzt werden, jedoch höchstens in solcher Menge, daß ein noch thermoplastisch verarbeitbares Produkt entsteht. Die im wesentlichen linearen Polyether-Diole besitzen vorzugsweise mittlere Molekulargewichte $\bar{M}_n$ von 450 bis 6000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Jc nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen bevorzugt mittlere Molekulargewichte $\bar{M}_n$ von 450 bis 6000 und können einzeln oder in Form von Mischungen untereinander zur Anwendung kommen.

Zerewitinoff-aktive Verbindungen (B2) sind sogenannte Kettenverlängerungsmittel und besitzen im Mittel 1,8 bis 3,0 zerewitinoff-aktive Wasserstoffatome und haben ein Molekulargewicht von 60 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4.4'-Diaminodiphenylmethane. Besonders bevorzugt werden als Kettenverlängerer Ethandiol, 1,4-Butandiol, 1,6-Hexandiol, 1,4-Di(ß-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten monofünktionelle Verbindungen können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen müssen so gewählt werden, daß ihre mittlere Funktionalität zwei nicht überschreitet, wenn thermoplastisch verarbeitbare Polyurethanelastomere hergestellt werden sollen. Falls höherfunktionelle Verbindungen eingesetzt werden, muß durch monofunktionelle Verbindungen die Gesamtfunktionalität herabgesetzt werden.

Die relativen Mengen der Verbindungen (B1) und (B2) in (B) werden bevorzugt so gewählt, daß das Verhältnis der Summe der Isocyanatverbindungen in (A) zu der Summe der zerewitinoffaktiven Wasserstoffatome in (B) 0,9:1 bis 1,2:1 beträgt, bevorzugt 0,95:1 bis 1,1:1.

Die erfindungsgemäßen, thermoplastischen Poyurethanelastomere können als Hilfsund Zusatzstoffe (C) bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren. Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den erfindungsgemäßen TPU beträgt in der Regel etwa 0 bis 5 Gew.-%, bevorzugt 0 bis 2 Gew.-%, bezogen auf die Gesamtmenge an TPU.

Beispiele für weitere Zusatzstoffe sind Gleitmittel. wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Die Komponenten (A) und (B) werden in einem Reaktor innerhalb einer Zeitspanne von maximal 5 Sekunden homogen vermischt. Bevorzugt sollte die Durchmischung unter geringer Rückvermischung erfolgen. Eine homogene Durchmischung im Sinne der Erfindung bedeutet, daß die Konzentrationsverteilung der Komponenten (A) und (B) und des Reaktionsprodukts in der Mischung eine relative Standardabweichung von weniger als 5% aufweist. Eine geringe Rückvermischung im Sinne dieser Erfindung bedeutet. daß das Verweilzeitverhalten in dem Reaktor dem einer Serie von ≥ 10 idealen Rührkesseln (Rührkesselkaskade) entspricht.

Bevor die Komponenten (A) und (B) kontinuierlich in den Reaktor eingeleitet werden. müssen sie getrennt voneinander, vorzugsweise in einem Wärmetauscher, auf eine Temperatur zwischen 60 und 220°C, vorzugsweise zwischen 90 und 190°C erwärmt werden. Erfindungsgemäß wesentlich ist, daß sich die Temperaturen der beiden Komponenten (A) und (B) vor der Zusammenführung im Reaktor um weniger als 20°C unterscheiden. Vorzugsweise sollte die Temperaturdifferenz zwischen den Komponentenströmen (A) und (B) < 10°C, besonders bevorzugt < 5°C sein.

Die so erhaltene Mischung wird dann in einem beliebigen Reaktor, vorzugsweise einem Extruder oder einem Reaktionsrohr, zum TPU umgesetzt.

Erfindungsgemäß wird die Polyaddition vorzugsweise in einem isolierten und vorzugsweise beheizbaren Statikmischer durchgeführt. Dieser hat den Vorteil, daß er keine beweglichen Teile aufweist und daß eine homogene, nahezu rückvermischungsfreie Durchmischung in kürzester Zeit erfolgt. Erfindungsgemäß einsetzbare Statikmischer sind in Chem.-Ing. Techn. 52, Nr.4 auf den Seiten 285-291 sowie in "Mischen von Kunststoff und Kautschukprodukten", VDI-Verlag, Düsseldorf 1993 beschrieben.

Bevorzugt werden Statikmischer gemäß DE-C 23 28 795 eingesetzt. Die Statikmischer weisen bevorzugt ein Länge/Durchmesserverhältnis von 8:1 bis 16:1, besonders bevorzugt von 10:1 bis 14:1 auf. Es ergibt sich eine Verweilzeit in dem Statikmischer von < 5 Sekunden, bevorzugt < 2.5 Sekunden. Die Statikmischer werden vorzugsweise aus Edelstahl, besonders bevorzugt aus V4A gefertigt.

In einer weiteren bevorzugten Ausführungsform wird das erfindungsgemäße Verfahren in einem Zweiwellenextruder, dessen Wellen bevorzugt gleichen Drehsinn aufweisen. durchgeführt. In diesem Fall kann der erste Teil des Extruders auch zum Autheizen der Isocyanatkomponente (A) verwendet werden.

Das nach dem erfindungsgemäßen Verfahren hergestellte TPU kann gegebenenfalls weiter bearbeitet werden, z.B. durch Temperung des Polymers in Form von Platten oder Blöcken, Zerkleinerung oder Granulierung in Schreddern oder Mühlen, Entgasung sowie Granulierung unter Aufschmelzen. Bevorzugt wird das Polymer durch ein Aggregat zur kontinuierlichen Entgasung und Strangbildung geführt. Bei diesem Aggregat kann es sich z.B. um eine Mehrwellenschneckenmaschine handeln, die möglichst mit keinen oder nur mit wenigen Knetelementen bestückt ist.

Gegenstand der vorliegenden Erfindung sind ferner die mit dem erfindungsgemäßen Verfahren erhaltenen thermoplastischen Polyurethanelastomeren. Es muß als überraschend angesehen werden, daß die erfindungsgemäß hergestellten Formmassen eine größere Homogenität und ein besseres Aufschmelzverhalten aufweisen.

Bevorzugt werden die erfindungsgemäß erhaltenen thermoplastischen Polyurethanelastomeren zur Herstellung von Folien und leicht aufschmelzenden Coextrusionstypen, wie Kaschierungen. Kalandrierungen, Schmelzkleber und für Powder-Slush-Coextrusionstypen verwendet.

## Beispiele

### Beispiel 1

In einen Statikmischer wurden getrennt voneinander 1630 g/h MDI und 2685 g/h eines Gemisches aus Polybutandioladipat (mittleres Molekulargewicht $\overline{M}_n$ = 800), das 200 ppm Zinndioctoat enthielt, und Butandiol im Gewichtsverhältnis 6,9:1 dosiert. Das MDI und Polyol/Butandiol-Gemisch hatten jeweils eine Temperatur von 140±10°C. Die Vermischung der Komponenten erfolgte in einem rundherum beheizten Statikmischer (Typ SMX, Sulzer AG) mit einem Durchmesser von 6 mm, einer Länge von 6 cm und eine Scherrate von 500 s$^{-1}$; die Reaktion wurde in einem Reaktionsrohr mit Mischelementen zu Ende geführt.

Mit diesem Verfahren konnte mehr als 90 Minuten lang TPU produziert werden, ohne daß ein Druckanstieg in dem Statikmischer beobachtet wurde.

### Beispiel 2

Dieser Versuch wurde analog Beispiel 1 durchgeführt, mit dem Unterschied, daß die Temperatur der Eduktströme 160±5°C betrug. Auch bei diesen Bedingungen konnte mehr als 90 Minuten lang TPU produziert werden, ohne daß ein Druckanstieg in dem Statikmischer beobachtet wurde.

### Beispiel 3 (Vergleich)

In einer Reaktionsextrusionsanlage vom Typ ZSK 83 wurde folgendes Temperaturprofil vorgegeben: Gehäuse 1-4: 120°C. Gehäuse 5-9: keine Temperaturvorgabe. Gehäuse 10-13: 120°C, Kopf: 200°C. Es wurde die Rezeptur aus Beispiel 1 verwendet. die Drehzahl betrug 300 U/min, der Durchsatz 600 kg/h. In Gehäuse 1 wurde MDI dosiert. Die Temperatur des MDI betrug eingangs Gehäuse 5 ca. 90°C. In Gehause 5 wurde das Polyol/Butandiol-Gemisch mit einer Temperatur von 140°C dosiert.

Die Ergebnisse der Beispiele 1 und 2 sowie des Vergleichsbeispiels 3 sind in Tabelle 1 zusammengefaßt. Die Rekristallisationstemperatur wurde durch DSC-Messung mit einem Kalorimeter vom Typ Perkin Elmer DSC 7 bestimt. Das im Vergleichsbeispiel erhaltene Produkt weist bei der DSC-Messung ein Peakmaximum bei einer höheren Temperatur auf.

Während der Schmelzindex-MVR bei den in den erfindungsgemäßen Beispielen hergestellten TPU bei einer Erhöhung der Temperatur von 190°C auf 200°C nur um den Faktor 2 ansteigt, erhöht sich dieser Wert im Vergleichsbeispiel um den Faktor 5. Die geringere Temperaturabhängigkeit des Schmelzindex-MVR (Verhältnis MVR-200°C zu MVR-190°C) und die höheren MVR-Werte der erfindungsgemäß hergestellten TPU zeigen ein verbessertes Aufschmelzverhalten an.

Tabelle 1:

|  | Beispiel 1 | Beispiel 2 | Beispiel 3 (Vergleich) |
|---|---|---|---|
| Rekristallisationstemperatur $T_c$ [°C] | 85 | 87 | 102 |
| Schmelzindex-MVR ** (190°C) [g/10 min] | 27 | 25 | 4,7 |
| Schmelzindex-MVR ** (200°C) [g/10 min] | 55 | 52 | 20,3 |

\*\*gemessen nach ASTM D 1238

**Beispiel 4 (Vergleich)**

Der Versuch wurde analog Beispiel 1 durchgeführt, jedoch betrug die Temperatur des MDI am Eintritt 60°C und die des Polyol/Butandiol-Gemisches 140°C. Nach etwa 10-15 min war der Druck in dem Statikmischer bereits auf >50 bar angestiegen, so daß das Experiment abgebrochen werden mußte.

Bei der technisch üblichen hohen Temperaturdifferenz von 80°C zwischen den Ausgangskomponenten beobachtet man verstärkt Inhomogenitäten aufgrund schlechterer Durchmischung. Dies führt über Vernetzungsreaktionen bzw. vorzeitige Kristallitausscheidungen zum Zuwachsen der Statikmischer.

**Beispiel 5**

In einen Statikmischer wurden 1194 g/h HDI und 3800 g/h eines Gemisches aus Polytetrahydrofuran (mittleres Molekulargewicht $\overline{M}_n$ = 1000) und Butandiol im Gewichtsverhältnis 11,5:1 getrennt dosiert. Die Temperaturen von HDI und Polyol/Butandiol-Gemisch betrugen jeweils 90±10°C. Zur Mischung wurde ein rundherum beheizter Statikmischer (Typ SMX, Sulzer AG) mit einem Durchmesser von 6 mm, eine Länge von 6 cm und eine Scherrate von 500 s$^{-1}$ eingesetzt; die Reaktion wurde in einem Extruder zu Ende geführt.

**Beispiel 6 (Vergleich)**

Der Versuch wurde analog Beispiel 5 durchgeführt, jedoch wurde dem Reaktor HDI mit einer Temperatur von 23°C und Polyol-Mischung mit einer Temperatur von 80°C zudosiert.

Die Ergebnisse von Beispiel 5 und Vergleichsbeispiel 6 sind in Tabelle 2 zusammengefaßt. Es zeigt sich, daß das nach dem erfinderischen Verfahren produzierte TPU ein verbessertes Aufschmelzverhalten aufweist. Die geringere Streuung der Einzelwerte des Schmelzindex-MVR innerhalb einer Messung bei dem erfindungsgemäß hergestellten Produkt läßt eine größere Homogenität erkennen.

Tabelle 2:

|  | Beispiel 5 | Beispiel 6 (Vergleich) |
|---|---|---|
| Rekristallisationstemperatur $T_c$ [°C] | 68 | 78 |
| Schmelzpunkt [°C] | 180 | 190 |
| Schmelzindex-MVR * bei 190°C [g/10 min] | 49,6±2 | 55 (Streuung 32-60) |

\*gemessen nach ASTM D 1238.

**Beispiele 7-10**

| TPU-Rezeptur: | |
|---|---|
| 1,0 mol | Polybutylenadipat, $\overline{M}_n$= 840 g/mol |
| 1,3 mol | 1,4-Butandiol |
| 2,3 mol | MDI |
| 200 ppm | Zinndioctoat (bezogen auf Polybutylenadipat) |
| 0,2 Gew.-% | Loxamid (bezogen auf die Gesamtmenge an TPU) |

Die Komponenten wurden in einen Extruder vom Typ ZSK 83 dosiert, der mit einer Drehzahl von 300 U/min und einem Durchsatz von 600 kg/h betrieben wurde. Die durch die Gehäusetemperaturen des Extruders vorgegebenen Temperaturprofile sind in Tab. 3 zusammengestellt. Bei den Beispielen 7-9 wurde MDI in das erste Gehäuse und das Polyolgemisch aus Polybutylenadipat und 1,4-Butandiol in das 5. Gehäuse des Extruders dosiert. Die Temperatur des MDI betrug in Beispiel 7 ca 60°C, in Beispiel 8 ca. 120°C, in Beispiel 9 ca. 130°C. In Beispiel 10 wurde das MDI auf 130°C erhitzt, das Polyolgemisch auf 140°C, dann wurden beide Eduktströme in das erste Gehäuse geführt. Der Katalysator wurde jeweils dem Polyolgemisch zugegeben, Loxamid dem Isocyanat beigemischt.

Tabelle 3:

| Vorgabe Schneckengehäusetemperaturen | | | | |
|---|---|---|---|---|
| Beispiel | 7 | 8 | 9 | 10 |
| Geh. 1 | 80°C | 140°C | 140°C | keine |
| 2 | 80°C | 140°C | 140°C | keine |
| 3 | 80°C | 140°C | 140°C | keine |
| 4 | keine | 140°C | 140°C | keine |
| 5 | keine | keine | keine | keine |
| 6 | keine | keine | keine | keine |
| 7 | keine | keine | keine | keine |
| 8 | keine | keine | keine | keine |
| 9 | keine | keine | keine | keine |
| 10 | keine | 100°C | 100°C | 100°C |
| 11 | keine | 100°C | 100°C | 100°C |
| 12 | 150°C | 120°C | 120°C | 100°C |
| 13 | 100°C | 120°C | 120°C | 100°C |
| Kopf | 200°C | 200°C | 200°C | 200°C |

Aus den erhaltenen Produkten wurden auf einer Extrusionsblasfolienanlage Folien hergestellt. Das TPU-Granulat wurde in einem Einwellen-Extruder vom Typ 30/25D Plasticorder PL 2000-6 (Fa. Brabender) aufgeschmolzen (Dosierung 3 kg/h, Temperaturen 185-205°C) und durch einen Folienblaskopf zu einer Schlauchfolie extrudiert. Der 100%-Modul des Produktes wurde nach DIN 53504/NS1 bestimmt. Die Ergebnisse sind in Tabelle 4 zusammengefaßt.

Tabelle 4:

| Beispiel | Temperatur Polyolgemisch | Temperatur MDI | Folieneigenschaften: Stippen / Struktur | 100%-Modul |
|---|---|---|---|---|
| 7* | 150°C | 50°C | viele / sehr stark | 12 |
| 8* | 140°C | 120°C | einige / deutlich | 11 |
| 9 | 140°C | 130°C | wenig / wenig | 11 |
| 10 | 140°C | 130°C | keine / keine | 11 |

* nicht erfindungsgemäße Vergleichsbeispiele

**Patentansprüche**

1. Verfahren zur kontinuierlichen Herstellung thermoplastischer Polyurethanelastomere, bei dem
    ein oder mehrere Polyisocyanate (A) und
    eine zerewitinoffaktive Wasserstoffatome aufweisende Mischung (B) aus

    B1) bis 85 Äquivalent-%, bezogen auf die Isocyanatgruppen in (A), einer oder mehrerer Verbindungen mit im Mittel mindestens 1,8 zerewitinoffaktiven Wasserstoffatomen und einem mittleren Molekulargewicht $\overline{M}_n$ von

450 bis 10000,

B2) 15 bis 99 Äquivalent-% (bezogen auf die Isocyanatgruppen in (A)) einer oder mehrerer Kettenverlängerungsmittel mit im Mittel mindestens 1,8 zerewitinoffaktiven Wasserstoffatomen und einem Molekulargewicht von 60 bis 400, sowie

0-20 Gew.-%, bezogen auf die Gesamtmenge an TPU, weiterer Hilfsund Zusatzstoffe (C) in einem Reaktor innerhalb von maximal 5 Sekunden homogen vermischt werden, wobei die Temperaturen der Komponenten (A) und (B) vor der Zusammenführung im Reaktor eine Differenz < 20°C aufweisen.

2. Verfahren gemäß Anspruch 1,bei dem die Temperatur der Komponenten (A) und (B) vor dem Eintritt in den Reaktor zwischen 60°C und 220°C beträgt.

3. Verfahren gemäß Anspruch 1, bei dem der Reaktor ein Statikmischer ist.

4. Verfahren nach Anspruch 3, **dadurch gekennzeichnet, daß** der Statikmischer ein Längen/Durchmesser-Verhältnis im Bereich von 8:1 bis 16:1 aufweist.

5. Verfahren gemäß Anspruch 1, bei dem der Reaktor ein Zweiwellenextruder ist.

6. Verfahren gemäß Anspruch 1, bei dem die erhaltene Mischung in einem Extruder oder Rohrreaktor zum thermoplastischen Polyurethanelastomer umgesetzt wird.

7. Thermoplastische Polyurethanelastomere hergestellt nach dem Verfahren gemäß Anspruch 1.

8. Verwendung der gemäß Anspruch 1 hergestellten thermoplastischen Polyurethanelastomere zur Herstellung von Folien, Kaschierungen, Kalandrierungen, Schmelzkleber und Powder-Slush-Coextrusionstypen.

## Claims

1. A process for the continuous preparation of thermoplastic polyurethane elastomers in which
   one or more polyisocyanates (A) and
   a mixture (B), with Zerewitinoff-active hydrogen atoms, comprising

   B1) 1 to 85 equivalent-%, with respect to the isocyanate groups in (A), of one or more compounds with on average at least 1.8 Zerewitinoff-active hydrogen atoms and an average molecular weight $\overline{M}_n$ of 450 to 10000,

   B2) 15 to 99 equivalent-% (with respect to the isocyanate groups in (A)) of one or more chain lengthening agents with on average at least 1.8 Zerewitinoff-active hydrogen atoms and a molecular weight of 60 to 400, and

   0-20 wt.%, with respect to the total amount of TPU, of further auxiliary agents and additives (C)
   are homogeneously premixed in a reactor within a period of at most 5 seconds, wherein the difference between the temperatures of components (A) and (B), before entering the reactor, is <20°C.

2. A process according to Claim 1, in which the temperature of components (A) and (B) before entrance into the reactor is between 60°C and 220°C.

3. A process according to Claim 1, in which the reactor is a static mixer.

4. A process according to Claim 3, **characterised in that** the static mixer has a length to diameter ratio in the range from 8:1 to 16:1..

5. A process according to Claim 1, in which the reactor is a twin shaft extruder.

6. A process according to Claim 1, in which the mixture obtained is reacted in an extruder or a tubular reactor to give thermoplastic polyurethane elastomers.

**7.** Thermoplastic polyurethane elastomers prepared in accordance with the process according to Claim 1.

**8.** Use of the thermoplastic polyurethane elastomers prepared according to Claim 1 for preparing films, laminates, calandered products, hot melt adhesives and powder-slush coextruded products.

**Revendications**

**1.** Procédé de fabrication en continu d'élastomères thermoplastiques de polyuréthanne, pour lequel
un ou plusieurs isocyanates (A) et
un mélange (B) présentant des atomes d'hydrogène mobiles (test de Zerevitinov positif) de

B 1) 1 à 85 % équivalents, rapportés aux groupes isocyanates dans (A), d'un ou plusieurs composés avec en moyenne au moins 1,8 atomes d'hydrogène mobiles (test de Zerevitinov positif) et d'un poids moléculaire moyen $\overline{M}_n$ de 450 à 10000,

B2) 15 à 99 % équivalents (rapportés aux groupes isocyanates dans (A)) d'un ou plusieurs agents prolongateurs de chaîne avec en moyenne au moins 1,8 atomes d'hydrogène mobiles (test de Zerevitinov positif) et un poids moléculaire moyen de 60 à 400, ainsi que

0-20 % en poids, rapportés à la quantité totale de TPU, d'autres substances auxiliaires et additifs (C)
sont mélangés de manière homogène dans un réacteur dans un délai de maximum 5 secondes, les températures des composants (A) et (B) présentant une différence < 20°C avant la mise en contact dans le réacteur.

**2.** Procédé suivant la revendication 1, pour lequel la température des composants (A) et (B) avant l'entrée dans le réacteur est comprise entre 60°C et 220°C.

**3.** Procédé suivant la revendication 1, pour lequel le réacteur est un mélangeur statique.

**4.** Procédé suivant la revendication 3, **caractérisé en ce que** le mélangeur statique présente un rapport longueur/ diamètre de l'ordre de 8:1 à 16:1.

**5.** Procédé suivant la revendication 1, pour lequel le réacteur est une extrudeuse à deux arbres.

**6.** Procédé suivant la revendication 1, pour lequel le mélange obtenu est transformé en un élastomère de polyuréthanne thermoplastique dans une extrudeuse ou un réacteur tubulaire.

**7.** Elastomère de polyuréthanne thermoplastique fabriqué par le procédé suivant la revendication 1.

**8.** Utilisation de l'élastomère de polyuréthanne thermoplastique fabriqué suivant la revendication 1 pour la fabrication de films, revêtements, calandrages, colles fusibles et coextrusion de moulage de poudres.